# EUROPEAN PATENT APPLICATION

(11) **EP 2 629 261 A1**
(43) Date of publication of application: **21.08.2013**
(21) Application number: 13155074.1
(22) Date of filing: 13.02.2013
(51) Int. Cl.: G06Q 30/02

(54) **Multimedia service system and method for operating the same**

(30) Priority: 17.02.2012 KR 20120016493
(71) Applicant: Samsung Electronics Co., Ltd, Gyeonggi-do 443-742 (KR)
(72) Inventor: Ban, Ji-Hye, Gyeonggi-do (KR); Chung, Do-Hyoung, Seoul (KR); Ku, Sang-Chul, Gyeonggi-do (KR); Park, Chan-Hyoung, Gyeonggi-do (KR); Shin, Gye-Joong, Gyeonggi-do (KR)
(74) Representative: Nederlandsch Octrooibureau

(57) **Abstract**

A multimedia service system includes a portable terminal that communicates with a server. When a portable terminal is located at or within a building, the portable terminal acquires floor information of the building from a server, calculates a present altitude itself, determines a floor corresponding to the calculated altitude from the floor information, receives a multimedia service for the detected floor from the server, and outputs the received multimedia service. The server provides altitude-by-altitude floor information of the building and a floor-by-floor multimedia service to the portable terminal.

## Description

### BACKGROUND OF THE INVENTION

### 1. Field of the Invention

The present invention relates generally to a multimedia service system that can be used to determine one's location within a structure such as a building or shopping mall, and a method for operating a portable terminal in a multimedia system..

### 2. Description of the Related Art

The trend in most metropolitan areas is to increase the height of buildings as vertical expansion. However, since information about the buildings is provided only through signposts, users have difficulty in finding their location or other locations within the buildings. For example, in most cases, users waste time trying to find out where a certain store is located in a building.

Due to the development of the electronic communication industry, portable terminals, such as mobile phones (cellular phones), electronic organizers, and personal digital assistants (PDAs), etc., are becoming necessities of modern society. Such devices are quickly becoming an important means for information transmission, and the type of transmission and different types of information being transmitted is rapidly changing. However, information locations with buildings is not provided through the portable terminals. Therefore, there is a need for a system that provides information about locations in buildings through portable terminals in order to increase the convenience of users.

### SUMMARY OF THE INVENTION

An exemplary object of the present invention is to substantially solve at least some of the above problems and/or disadvantages and to provide at least the advantages below. Accordingly, an exemplary object of the present invention is to provide a multimedia service system for providing information about a building and its locations therein through a portable terminal, and a method for operating the same.

Another exemplary object of the present invention is to provide a system for providing a floor-by-floor multimedia service for a building to a portable terminal, and a method for operating the same.

Another exemplary object of the present invention is to provide a portable terminal for acquiring from a server floor information of a building, calculating an altitude of the portable terminal, detecting/determining a floor corresponding to the calculated altitude from the floor information, receiving a multimedia service for the detected floor from the server, and outputting the same.

Another exemplary object of the present invention is to provide a server for that outputs altitude-by-altitude floor information of a building and a floor-by-floor multimedia service to the portable terminal.

According to a first aspect of the present invention at least one of these object is achieved by, a multimedia service system comprising a portable terminal that is configured to acquire, from a server a floor information of a building in which it is located, to calculate an altitude of itself within the building in which it is located, to determine a floor corresponding to the calculated altitude, to receive a multimedia service for the detected floor from the server, and outputting the received multimedia service; and the server is configured to provide altitude-by-altitude floor information of the building and a floor-by-floor multimedia service to the portable terminal.

According to a second aspect of the present invention, at least one of these objects is achieved by a method for operating in a portable terminal comprising detecting, by a portable terminal, a location at a building and requesting from a server floor information of the building, receiving, by the portable terminal, the requested floor information of the building from the server, storing the received floor information in storage, measuring by the portable terminal an altitude of the portable terminal's present location, determining a floor corresponding to the measured altitude from the floor information and requesting a multimedia service for the detected floor from the server; and receiving, by the portable terminal, the multimedia service for the floor from the server and outputting the received multimedia service.

Further advantageous embodiments of the invention are defined in the dependent claims.

### BRIEF DESCRIPTION OF THE DRAWINGS

The above and other exemplary objects, features and advantages of the present invention will become more apparent to the person of ordinary skill in the art from the following detailed description when taken in conjunction with the accompanying drawings in which:
FIG. 1A is a diagram illustrating a multimedia service system according to an exemplary embodiment of the present invention;
FIG. 1B is a diagram illustrating a multimedia service system according to another exemplary embodiment of the present invention;
FIG. 1C is a schematic diagram illustrating an exemplary process of operating a multimedia service system according to an exemplary embodiment of the present invention;
FIG. 2 is a block diagram of a multimedia service system according to an exemplary embodiment of the present invention;
FIG. 3 is a communication flow diagram illustrating an exemplary process of operating a multimedia service system illustrated in FIG. 1A; and
FIG. 4 is a communication flow diagram illustrating a process of operating a multimedia service system illustrated in FIG. 1B.

### DETAILED DESCRIPTION

Exemplary embodiments of the present invention will now be described herein below with reference to the accompanying drawings. In the following description, detailed descriptions of well-known functions or configurations may be omitted when their include could unnecessarily obscure appreciation of the subject matter of the present invention by a person of ordinary skill in the art. Also, the terms used herein are defined according to the functions of the present invention. Thus, the terms may vary depending on users' or operators' intentions or practices. Therefore, the terms used herein should be understood by a person of ordinary skill in the art based on the descriptions made herein, and not by mere dictionary meaning.

As used in the specification, "multimedia service" is understood by a person of ordinary skill in the art to refer to a communication service that provides an exchange of information. The exchange of information may include characters, numerical data, images, moving images, and voices, and may be performed in, for example, building structures, facilities, maps, and store-by-store sales events. In general, such a multimedia service may also be referred to as an "indoor service". The present invention provides a multimedia service system for providing via portable terminal information about a building, and a method for operating the same. A multimedia service system according to an exemplary embodiment of the present invention provides a floor-by-floor multimedia service for a building through a portable terminal. In particular, a portable terminal according to an exemplary embodiment of the present invention acquires from a server the floor information of a building, calculates an altitude of a present location of the portable terminal, detects a floor corresponding to the calculated altitude based on the floor information, receives a multimedia service for the detected floor from the server, and outputs the same. A according to an exemplary embodiment of the present invention, the server provides to the portable terminal an altitude-by-altitude floor information of a building and a floor-by-floor multimedia service.

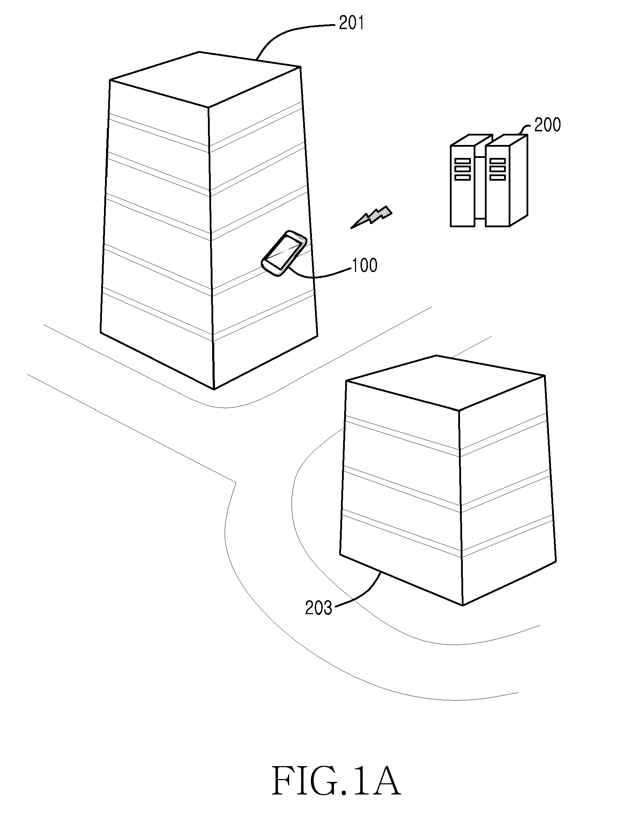

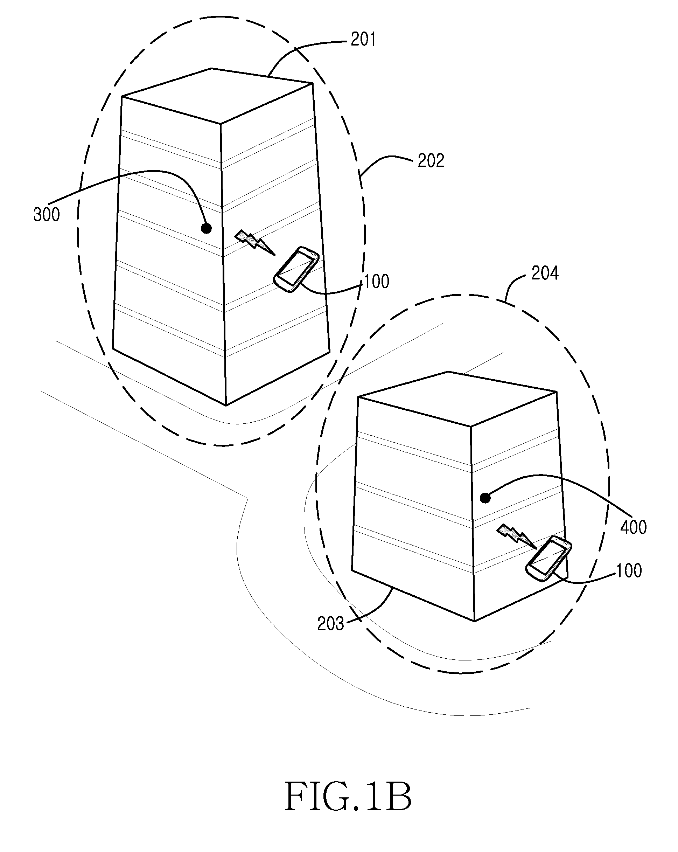

FIGS. 1A and 1B are diagrams illustrating multimedia service systems according to exemplary embodiments of the present invention.

Referring now to FIG. 1A, the multimedia service system may preferably include a portable terminal 100 and a server 200. When the portable terminal 100 is located at a building 201, the portable terminal 100 can request altitude-by-altitude floor information of the building 201 from the server 200, and the server 200 may transmit the requested altitude-by-altitude floor information of the building 201 to the portable terminal 100. The portable terminal 100 may receive the floor information of the building 201 from the server 200 and store the same. In addition, the portable terminal 100 may measure an altitude at which the portable terminal 100 is currently located, and may detect a floor corresponding to the measured altitude from the floor information. The portable terminal 100 may request a multimedia service for the detected floor from the server 200, and the server 200 may transmit the multimedia service for the detected/determined floor to the portable terminal 100. The portable terminal 100 may receive the multimedia service from the server 200 and output the same.

The multimedia service may refer to a communication service providing exchange of information including characters, numerical data, images, moving images, and voices, and may be, for example, building structures, facilities, maps, and store-by-store sales events. In general, such a multimedia service may also be referred to as an indoor service. When the portable terminal outputs the multimedia service received from the server 300, the portable terminal displays images of the multimedia service, and/or outputs sounds of the multimedia service.

In particular, in the case where the portable terminal 100 includes an altimeter and provides measurement of an accurate altitude, the portable terminal 100 may accordingly detect an accurate floor from the floor information acquired from the server 200. The server 200 may periodically update and store altitude-by-altitude floor information of respective buildings 201 and 203 and a floor-by-floor multimedia service, as this information is subject to change.

The portable terminal 100 and the server 200 are communication-connected through any one of cellular communication and Wireless Fidelity (Wi-Fi) communication protocols.

The multimedia service according to an embodiment of the present invention, may refer to a communication service providing exchange of information including characters, numerical data, images, moving images, and voices, and may be, for example, building structures, facilities, maps, and store-by-store sales events. In general, such a multimedia service may also be referred to as an indoor service.

Referring now to FIG. 1B, the buildings 201 and 203 can include their respective open networks (e.g., Digital Living Network Alliance (DLNA)). For example, the first building 201 may preferably include a first server configuring a first open network, and the second building 203 may preferably include a second server configuring a second open network. When the portable terminal 100 is located within a communication radius 202 of the first server, in other words, when the portable terminal 100 is located at the first building 201, the portable terminal 100 may participate in the first open network and receive floor information of the first building 201 and a floor-by-floor multimedia service of the first building 201.

In addition, when the portable terminal 100 is located within a communication radius 204 of the second server, that is, when the portable terminal 100 is located at the second building 203, the portable terminal 100 may participate in the second open network and receive floor information of the second building 203 and a floor-by-floor multimedia service of the second building. Although the term "communication radius 204" is being used, an artisan understands and appreciates that a range of communication is not necessarily circular range.

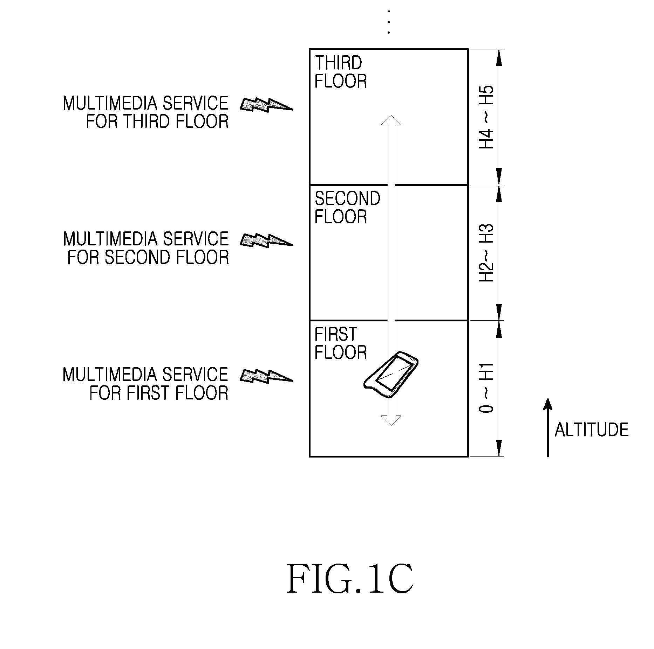

FIG. 1C is a schematic diagram illustrating a process of operating a multimedia service system according to an exemplary embodiment of the present invention.

Referring now to FIG. 1C, the portable terminal 100 acquires the floor information of a building at which the portable terminal 100 itself is located from the server 200/300, and stores the same. For example, when an altitude is 0 to H1, the floor information of the building may be defined as the first floor; when an altitude is H2 to H3, the floor information of the building may be defined as the second floor; and when an altitude is H4 to H5, the floor information of the building may be defined as the third floor. The portable terminal 100 may measure an altitude and detect/determine a floor corresponding to the measured altitude from the floor information. In addition, the portable terminal 100 may receive a multimedia service for the detected floor from the server 200/300 and output the same.

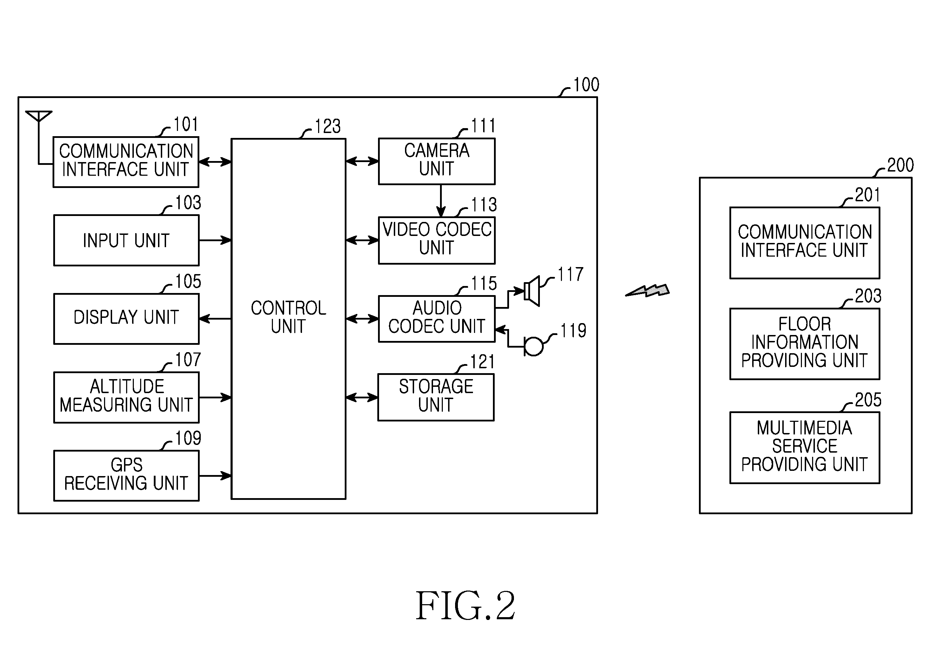

FIG. 2 is a block diagram of a multimedia service system according to an exemplary embodiment of the present invention.

Referring now to FIG. 2, in the following description, examples of the portable terminal 100 may include cellular phones, personal communication service (PCS) phones, personal digital assistants (PDAs), IMT2000 terminals, and fourth-generation broadband system terminals.

The portable terminal 100 may preferably include a communication interface unit 101, an input unit 103, a display unit 105, an altitude measuring unit 107, a global positioning system (GPS) receiving unit 109, a camera unit 111, a video codec unit 113, an audio codec unit 115, a speaker 117, a microphone 119, a storage unit 121, and a control unit 123. The altitude measuring unit 107 may be incorporated in the control unit 123. Also, The altitude measuring unit 107 may be referred to as another control unit.

The communication interface unit 101(see FIG. 2) may have a hardware/software configuration that enables video communication, voice communication, and data communication.

The input unit 103 may receive a user input and provide to the control unit 123 an input signal corresponding to the user input to the control unit 123. The display unit 105 may output images under the control of the control unit 123. The control unit may comprise hardware such as a processor or microprocessor that is configured with, for example, machine executable code. The display unit 105 may output video data demodulated through the video codec unit 113.The altitude measuring unit 107 may preferably include an altimeter, calculates an altitude, and notifies the control unit 123 of the calculated altitude. The GPS receiving unit 109 may detect a position on the earth's surface using a GPS satellite, and notify the control unit 123 of the detected position.

With continued reference to FIG. 2, the camera unit 111 may capture an image of an object to generate video data, and output the video data to be sent to the video codec unit 113.

The video codec unit 113 may modulate video data received from the camera unit 111, and provide the result to the control unit 123. Also, the video codec unit 113 may demodulate video data received from the control unit 123, and provide the result to the display unit 105. The display unit 105 may constitute a touch screen.

The audio codec unit 115 is configured to modulate audio data received from the microphone 119, and provide the result to the control unit 123. Also, the audio codec unit 115 may demodulate audio data received from the control unit 123, and provide the result to the speaker 117. Audio data could also be received by the communication interface unit.

The storage unit 121, which preferably comprises a non-transitory machine readable medium, stores machine executable code for controlling an overall operation of the portable terminal 100. Various data are input/output when a control operation of the portable terminal 100 is performed. In particular, the storage unit 121 may store floor information of a building and an altitude-by-altitude multimedia service for the building received from the server 200.

The control unit 123, which is preferably comprised of a processor or microprocessor, performs processes and controls for video communication, voice communication, and data communication. In particular, the control unit 123 requests floor information of a building detected from the GPS receiving unit 109 from the server 200, detects a floor corresponding to an altitude measured by the altitude measuring unit 107 from the floor information, and request a multimedia service for the detected floor from the server 200. The control unit 123 is configured to control the storage of floor information of a building received from the server 200, for example, by storing same in storage unit 212, and controls and output a multimedia service received from the server 200 to the display unit 105 and the speaker 117.

With continued reference to FIG. 2, the server 200 may include a communication interface unit 201, a floor information providing unit 203, and a multimedia service providing unit 205. All of the aforementioned comprise hardware such as a processor or microprocessor configured for the respective functions of each unit. In addition, it is also possible that one or more of the units may be operated by the same processor or microprocessor,

The communication interface unit 201 may have a hardware/software configuration that enables communication with the portable terminal 100.

The floor information providing unit 203 may store altitude-by-altitude floor information of each building in a respective area, and provide the same to the portable terminal 100. Alternatively, the server could receive this information from an additional or alternative source, for example, an online database that is retrieved by the server for a certain location and provided to the portable terminal.

The multimedia service providing unit 205 may store a floor-by-floor multimedia service for each building, and provide the same to the portable terminal 100.

As described with reference to FIG. 1B, each building 201, 203 may include a respective server 300/400 configuring a home network. For example, a first building 201 may include a first server 300 configuring a first open home network, and a second building 203 may include a second server 400 configuring another open home network.

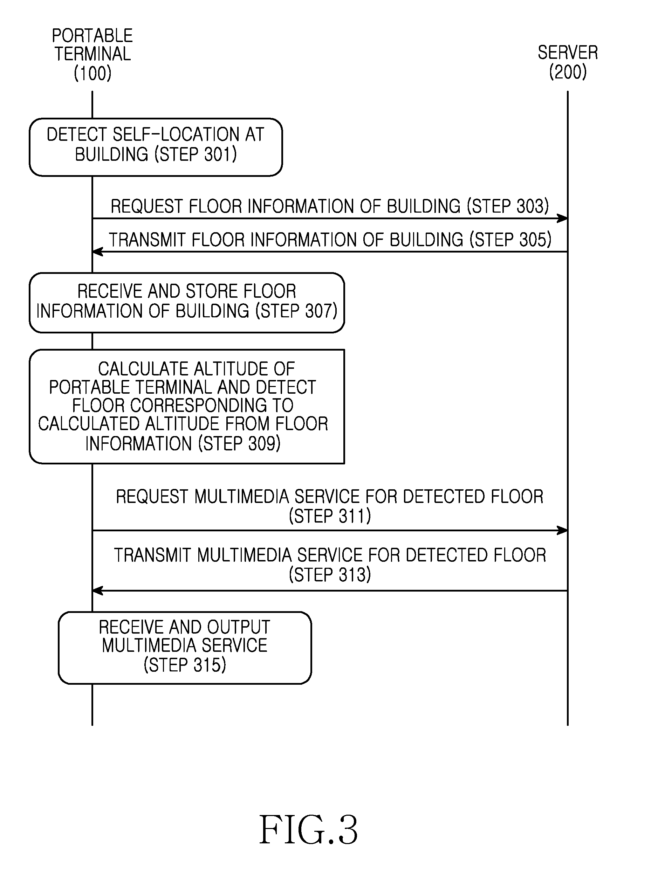

FIG. 3 is a communication flow diagram illustrating an exemplary process of operating a multimedia service system such as the type illustrated in FIG. 1A.

Referring now to FIG. 3, at step (301), the portable terminal 100 detects a current location of itself at a building.

At step (303), the portable terminal 100 requests floor information of the building from the server 200, and at step (305) the server 200 transmits the requested floor information of the building to the portable terminal 100.

At step (307) The portable terminal 100 receives the floor information of the building from the server 200 and stores the same.

At step (309), the portable terminal 100 calculates an altitude and detects a floor where it is determined that the portable terminal 100 itself is located, that corresponds to the calculated altitude from the floor information.

At step (311), the portable terminal 100 requests a multimedia service for the detected floor from the server 200 , and at step (313) the server 200 transmits the multimedia service to the portable terminal 100.

At step (315), the portable terminal 100 receives the multimedia service from the server 200 and outputs the same.

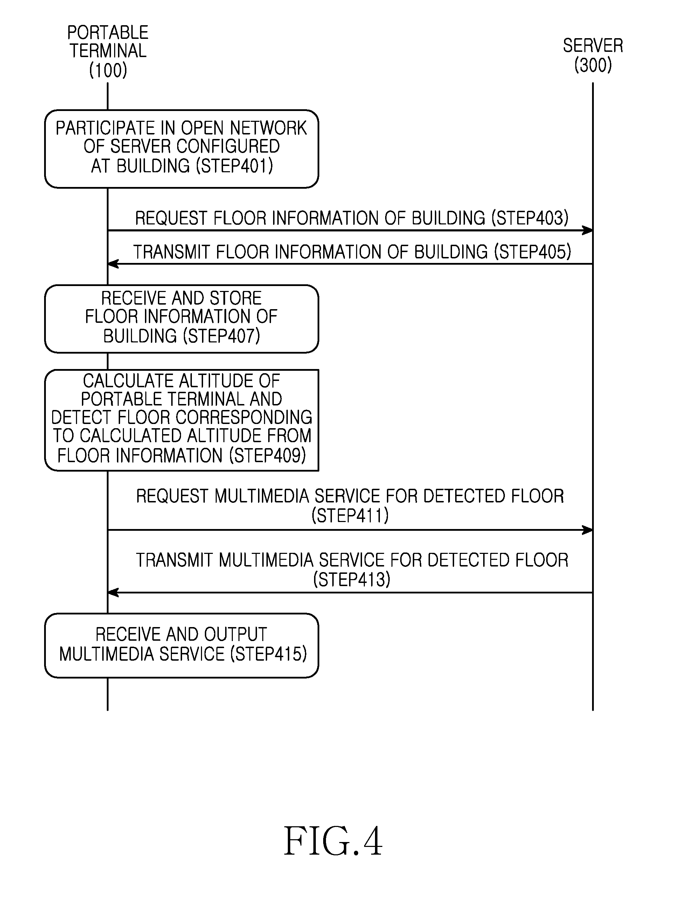

FIG. 4 is a communication flow diagram illustrating a process of operating a multimedia service system illustrated in FIG. 1B.

Referring now to FIG. 4, at step (401) the portable terminal 100 participates (e.g. engages with ) in an open network of the server 300 included in a building. For example, the portable terminal 100 enters the building and participates in an open network of the server 300.

At step (403), the portable terminal 100 requests floor information of the building from the server 300 utilizing the open network, and at step (405) the server 300 transmits the floor information of the building to the portable terminal 100.

At step (407), the portable terminal 100 receives the floor information of the building from the server 300 and stores the same.

At step (409), the portable terminal 100 calculates an altitude and detects a floor corresponding to the calculated altitude from the floor.

At step (411), the portable terminal 100 requests a multimedia service for the detected floor from the server 300, and at step (413) the server 300 transmits the multimedia service to the portable terminal 100.

At step (415), the portable terminal 100 receives the multimedia service from the server 300 and outputs the same.

The multimedia service may refer to a communication service providing exchange of information including characters, numerical data, images, moving images, and voices, and may be, for example, building structures, facilities, maps, and store-by-store sales events. In general, such a multimedia service may also be referred to as an indoor service. When the portable terminal outputs the multimedia service received from the server 300, the portable terminal displays images of the multimedia service, and/or outputs sounds of the multimedia service.

Consequently, the multimedia service system and the method for operating the multimedia service system according to the present invention provides information about buildings to users, thus improving the convenience of the users.

It will be appreciated that exemplary embodiments of the present invention according to the claims and description in the specification can be realized in the form of hardware, software or a combination of hardware and software, all of which are statutory subject matter on which the claims are based.

Any such software is stored as machine executable code in a computer readable storage medium. The computer readable storage medium stores one or more programs (software modules), the one or more programs comprising instructions, which are loaded into and executed by one or more processors in an electronic device, causing the electronic device to perform a method of the present invention.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware that may be loaded with executable code in the claimed invention.

While the invention has been shown and described with reference to certain exemplary embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope of the claimed invention will be construed as being included in the present invention.

## Claims

1. A multimedia service system comprising:
a portable terminal and a server, wherein the portable terminal is configured to acquire from the server a floor information of a building in which it is located, calculates an altitude of itself within the building in which it is located, determining a floor corresponding to the calculated altitude from the floor information, receiving a multimedia service for the determined floor from the server, and outputting the received multimedia service; and
the server is configured to provide altitude-by-altitude floor information of the building and a floor-by-floor multimedia service to the portable terminal.

2. The multimedia service system of claim 1, wherein the portable terminal further includes:
a communication interface unit having a hardware/software configuration enabling communication with the server;
a global positioning system (GPS) receiving unit for detecting a position of the portable terminal;
an altitude measuring unit including an altimeter to measure an altitude;
a display unit and a transducer for outputting the multimedia service received from the server;
a storage unit for storing the received floor information of the building; and
a control unit that is configured to control acquiring from the server the floor information of the building corresponding to the detected position of the portable terminal by the GPS receiving unit from the server, storing the acquired floor information in the storage unit, determining the floor corresponding to the altitude measured by the altitude measuring unit from the floor information, receiving from the server the multimedia service for the determined floor, and outputting the received multimedia service to the display unit and the transducer.

3. The multimedia service system of claim 2, wherein the transducer comprises at least one of a speaker or an audio port.

4. The multimedia service system of claim 1, wherein the server comprises:
a communication interface unit being configured for communicating with the portable terminal;
a floor information providing unit for transmitting the floor information of the building to the portable terminal; and
a multimedia service providing unit for transmitting the floor-by-floor multimedia service for the building to the portable terminal.

5. The multimedia service system of claim 1, wherein the portable terminal and the server are communication-connected using any one of cellular communication and Wireless Fidelity (Wi-Fi) communication.

6. The multimedia service system of claim 1, wherein the portable participates in an open network of the server when the portable terminal enters a communication radius of the server.

7. The multimedia service system of claim 1, wherein the server is located at least one of: within the building, or within an RF range of the portable terminal, or via the Internet,

8. The multimedia service system of claim 1, wherein the server is located outside of the building and within transmission range of the portable terminal.

9. A method for operating in a portable terminal, comprising:
detecting, by a portable terminal, a location at a building and requesting from a server floor information of the building;
receiving, by the portable terminal, the requested floor information of the building from the server, storing the received floor information in storage, measuring by the portable terminal an altitude of the portable terminal's present location, determining a floor corresponding to the measured altitude from the floor information and requesting a multimedia service for the determined floor from the server; and
receiving, by the portable terminal, the multimedia service for the floor from the server and outputting the received multimedia service.

10. The method for operating in a portable terminal as claimed in claim 9" further comprising participating, by a portable terminal, in an open network of the server included in a building.

11. The method for operating in a portable terminal as claimed in claim 9 or 10, wherein the server is located at least one of: within the building, or within an RF range of the portable terminal, or via the Internet,

12. The method for operating in a portable terminal as claimed in claim 11, wherein the server is located outside of the building and within transmission range of the portable terminal.
